# EUROPEAN PATENT SPECIFICATION

(11) **EP 1 136 716 B1**
(45) Date of publication and mention of the grant of the patent: **14.05.2008**
(21) Application number: 01106758.4
(22) Date of filing: 17.03.2001
(51) Int. Cl.: F16D 48/06, F02D 17/00, B60W 10/02, B60W 10/06

(54) **A method for detecting the occurence of a declutch**
Verfahren zur Erkennung des Ausrücksvorganges einer Kupplung
Procédé de reconnaissance d'un état de débrayage dans un embrayage

(30) Priority: 24.03.2000 LU 90556
(43) Date of publication of application: 26.09.2001
(73) Proprietor: Delphi Technologies, Inc., Troy, MI 48007 (US)
(72) Inventor: Schreurs, Bart, 6791 Athus (BE); Peters, Michel, 1135 Luxembourg (LU)
(74) Representative: Beissel, Jean

(56) References cited:
- EP-A- 0 390 423
- EP-A- 0 423 799
- EP-A- 0 627 336
- EP-A- 0 697 302
- DE-A- 3 809 118
- DE-A- 19 538 308
- FR-A- 2 682 649
- US-A- 4 632 231

## Description

### Field of the invention

The present invention generally relates to a method for detecting the occurrence of a declutch of an internal combustion engine coupled to a clutch and a method for controlling an internal combustion engine.

### Background of the invention

A permanent concern of the automotive industry is to improve driveability, comfort and performance of vehicles. However, one problem that has been observed in modern engines is the occurrence of engine speed flares during gearshifts, even if the accelerator pedal had been entirely released before depressing the clutch pedal. The reason for this is that the load on the engine changes abruptly when the clutch pedal is depressed, while a lot of air is still available in the intake manifold. The amount of air trapped in the intake manifold is a given and cannot be modified. Hence, the only way to reduce or eliminate the engine speed flare is to shut-off fuel or spark until the amount of air in the manifold has reached a steady-state value. Shutting-off spark is however not conceivable, as fuel would flow through the combustion chamber into the exhaust. Moreover, fuel cannot be shut-off every time the accelerator pedal is released, i.e. every time the throttle is closed. It would indeed result in a sudden change in brake torque which leads to a bumpy behavior for normal let-offs without a declutch.

One solution to reduce engine speed flares during gearshifts would be to shut-off fuel when the clutch pedal is depressed after a let-off. Unfortunately, until today there hasn't been proposed any efficient and reliable way to detect a declutch.

EP 0 697 302 A1 which constitutes the closest prior art, discloses a downshift logic for a semi-automatic mechanical transmission with a manual clutch controller (e.g. a driver-operated clutch pedal). When the engine is declutched from the input shaft of the transmission during a downshift transient, the engine controller determines the engine speed that is necessary to synchronize the engine shaft with the input shaft and controls the engine in such a way as to achieve the suitable engine speed before engaging the clutch. When the operator manually declutches in a downshift transient, the engine controller may cause the engine to run at high speed in the unnecessary attempt to achieve synchronous operation with the input shaft Synchronization of the engine speed by the controller is prohibited if, during a downshift, manual clutch disengagement is sensed Clutch engagement/disengagement may be sensed by a position sensor or by sensing if, over a period of time, input shaft and engine shaft speeds are equal

### Object of the invention

The object of the present invention is to propose a simple and efficient method for detecting the occurrence of a declutch. This object is achieved by a method as claimed in claims 1, 6 and 7.

### Summary of the invention

A method in accordance with the invention concerns the detection of the occurrence of a declutch of an internal combustion engine coupled to a clutch and having a throttle valve for controlling intake air flow. The method comprises the steps of:
- detecting a transition from open to closed throttle;
- monitoring the engine speed after the transition from open to closed throttle; and
- concluding to the occurrence of a declutch if said engine speed increases.

After a let-off, which causes a transition from open to closed throttle, the expected engine response is a decrease in engine speed. However, if the clutch pedal is depressed, the engine speed has a tendency to increase. Hence, an increase in engine speed after a transition from open to closed throttle is a reliable criterion for detecting the occurrence of a declutch. Moreover, the method can be easily implemented as it uses conventional parameters.

It has to be noted, that the expression "transition from open to closed throttle" means the transition from any open position of the throttle to the idle speed throttle position. In other words, if a transition to closed throttle position occurs, the throttle does not necessarily have to be fully closed.

The occurrence of a declutch is only determined if the increase of the engine speed exceeds a predetermined delta engine speed threshold. In other words, the declutch is only detected, if the engine speed increases by a predetermined value above the engine speed at the transition from open to closed throttle. Hence the conclusion of the occurrence of a declutch on the basis of a parasitic increase in engine speed can be avoided.

As a matter of fact, on let-offs, respectively on transitions from open to closed throttle, the drivetrain, which is connected to the clutch, can be excited because of an abrupt engine torque change. This results in drivetrain oscillations, which are gear dependent and dampen out over time. Of course, these oscillations cause engine speed fluctuations, also in the form of gear dependent oscillations. Therefore, to prevent the erroneous detection of a declutch, the monitoring of the engine speed is preferably only started after a delay period following said transition from open to closed throttle.

The monitoring of engine speed is carried out during a limited time, called monitoring period, after a transition from open to closed throttle. This is to prevent the erroneous detection of a declutch when the throttle is closed driving downhill, thus causing an increase in engine speed over a certain time period depending on the gear.

Advantageously, the delay period, the monitoring period, and/or the delta engine speed threshold are defined for each gear. Hence the method is optimized in function of the gear, and permits an error free detection of a declutch.

It follows that the engine speed is monitored during a gear dependent time window after the transition from open to closed throttle, starting after said delay period. Preferably, the time window is defined so as to coincide temporally with the first valley of engine speed oscillations that would be caused by a let-off without a declutch. This permits to select a time interval during which, if no declutch is performed, the engine speed reaches a minimum. Hence, if an increase in engine speed is monitored during this time window, it can without any doubt be concluded to the occurrence of a declutch.

The transition from open to closed throttle can easily be determined by a sensor associated to the throttle valve. However, this transition may also be determined on the basis of the position of the accelerator pedal. A let-off can thereby be used in the present method as an indication of a transition from open to closed throttle.

According to another aspect of the invention, a method is proposed for generating a signal indicating a declutch of an internal combustion engine coupled to a clutch, the engine having a throttle valve for controlling intake air flow. The method comprises the steps of:
- monitoring the engine speed after reception of a signal indicating a transition from open to closed throttle; and
- generating a signal indicating a declutch if said engine speed increases.

Such a method may be advantageously implemented on electronic engine controls where the indication of a declutch is needed as a condition in different procedures. It will be understood that the above described embodiments and preferences can be adapted to this method for generating a signal indicating a declutch.

According to a further aspect of the present invention, a method is proposed for controlling an internal combustion engine coupled to a clutch, said combustion engine comprising a fuel supply and a throttle valve for controlling intake air flow. This method comprises the steps of:
- detecting a transition from open to closed throttle;
- detecting the occurrence of a declutch according to a method as set out above, and
- shutting-off said fuel supply if a declutch is detected.

With this method for operating a combustion engine, the speed flares actually known in modern engines can be widely avoided. It will be appreciated, that the shutting-off of the fuel supply can be accompanied by a clearing of dashpot airflow offsets. It follows, that with the described method, engine speed flares can be reduced without having to compromise the normal amount of dashpot airflow offset. Up to now the dashpot airflow offset had always to be calibrated so as not to cause excessive engine speed flares on gear-shifts while still providing smooth let-off behavior.

The fuel supply is preferably shut-off until the engine speed has decreased to a predetermined engine speed threshold value, e.g. the desired idle speed plus a calibratable offset, or until a transition from closed to open throttle has occurred, i.e. when the accelerator pedal is depressed.

In order to avoid a bumpy behavior of the vehicle, the fuel supply is advantageously shut-off only if the speed of the vehicle driven by said internal combustion engine is higher than a predetermined vehicle speed threshold value. In this case said fuel supply is preferably shut-off until the engine speed has decreased to a predetermined threshold value or until a transition from closed to open throttle has occurred or until the speed of the vehicle has decreased to a value below said predetermined vehicle speed threshold value.

### Brief description of the drawings

The present invention will now be described, by way of example, with reference to the accompanying drawings, in which:
- Fig.1:: shows a flow chart of a method for gear shift detection;
- Fig.2:: shows a flow chart of a method for controlling an internal combustion engine;
- Fig.3:: shows the graph of the engine speed in case of a transition from open to closed throttle without declutch.
- Fig.4:: shows the graph of the normal engine speed in case of a transition from open to closed throttle followed by a declutch.

### Detailed description of a preferred embodiment

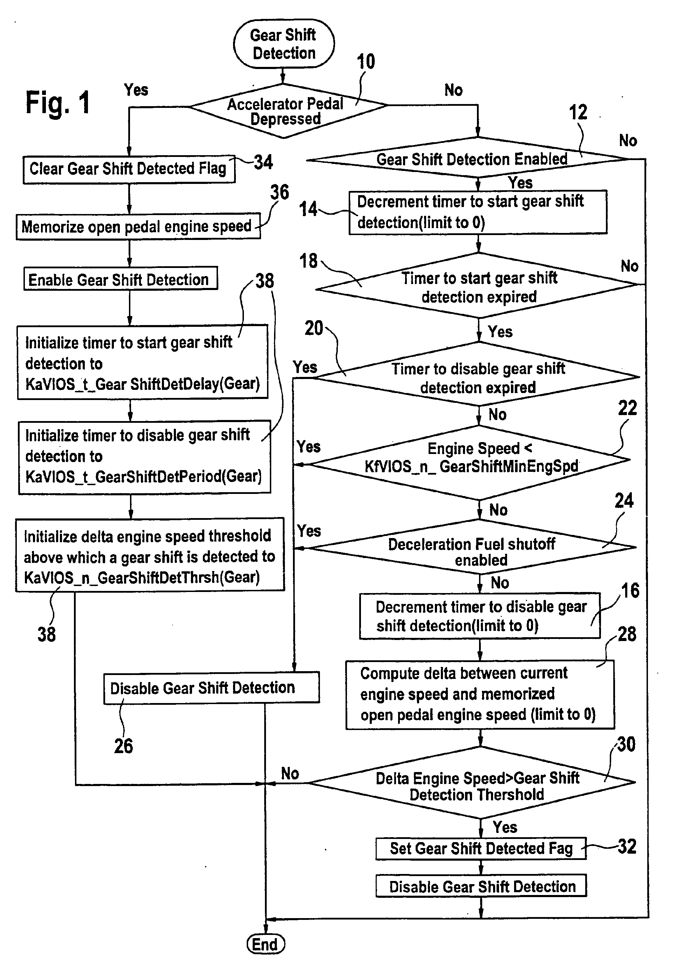

Fig. 1 shows a flowchart of a preferred embodiment of a method of detecting a declutch respectively a gear shift according to the present invention. This method is used in a vehicle each time that the accelerator pedal is released, i.e. at each transition from open to closed throttle.

As long as the comparison at 10 does not reveal, that the accelerator pedal is depressed again, and that the gear shift detection has not been disabled (test at 12), a first (gear dependent) timer is decremented (shown at 14), the expiration of which sets the beginning of the detection time window. The first timer is preferably calibrated so as to expire at a moment at which the engine speed would decrease due to the above described drive train oscillations in the case of a let-off without declutch. Accordingly the monitoring of the engine speed is only started after a delay period following said transition from open to closed throttle.

A second gear dependent timer is decremented at 16, the expiration of which sets the end of the detecting time window. As the first and second timers are gear dependent, the time window which is defined between the expiration of the timers is also gear dependent. Preferably, the time window is defined so as to coincide temporally with the first valley of engine speed oscillations that would be caused by a let-off without a declutch. This permits to select a time interval during which, if no declutch is performed, the engine speed reaches a minimum.

Only within the so defined time window, i.e. only after the first timer has expired (at 18) and while the second timer is still active (test at 20), the gear shift detection method is enabled. Further conditions for the gear shift detection to be enabled may be set. For instance the engine speed should be higher than a minimum threshold speed value, below which a gear shift is not likely (see test at 22). Furthermore normal deceleration fuel shut off should not be enabled (test at 24) in order not to interfere with the corresponding algorithm. If one of these conditions is not met, the gear shift detecting method is disabled 26.

If however all the conditions are met, the difference of the current engine speed and the engine speed at the moment of the pedal let-off is computed (28) and the so calculated difference is compared (30) to a gear dependent delta engine speed threshold value, which is indicative of the engine speed increase in case of a declutch. In other words, if the engine speed increases so that the computed difference in engine speed exceeds this threshold value, there is concluded on the occurrence of a declutch and a respective flag is set at 32.

If the accelerator is depressed (test at 10), the gear shift detected flag is cleared (34) and all the parameters of the method are reset. This means that e.g. the current engine speed is constantly memorized to be used in the next loop of the algorithm as the engine speed at the moment of the transition from open to closed throttle 36. Furthermore the first and second timers and the delta engine speed threshold value are initialized depending on the current gear 38.

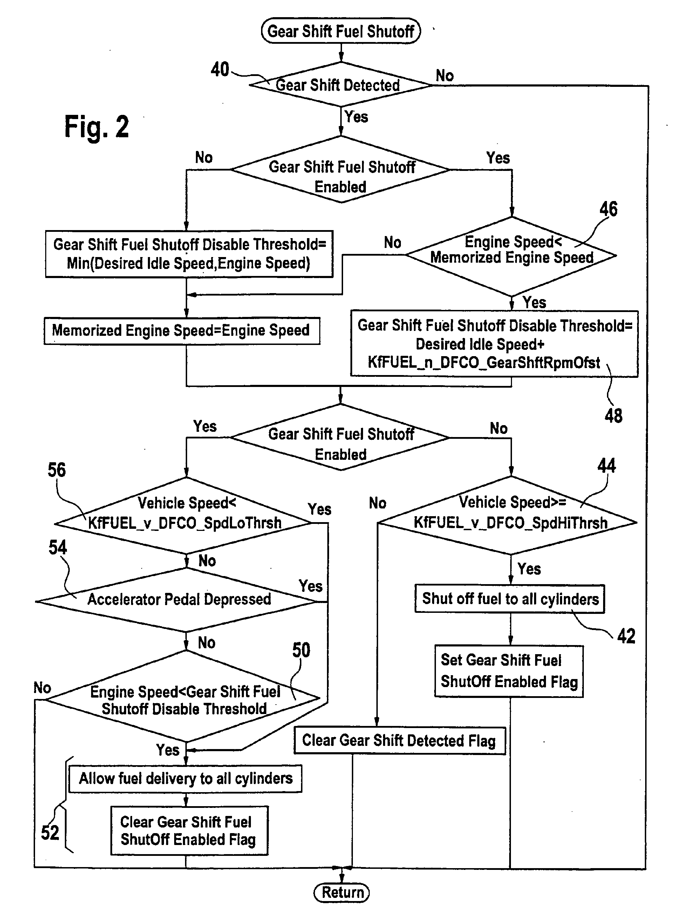

Fig.2 shows a flow chart of a method for controlling an internal combustion engine using the method of detection of a gear shift of Fig.1. If a gear shift is detected (at 40) and the fuel shut off is not already enabled, the fuel is shut off to all the cylinders 42 if the vehicle speed is higher than the above described vehicle speed threshold value 44. It follows that the fuel shut off is now enabled.

The engine speed is then monitored 46 in order to detect the moment when the engine speed starts to decrease. Once the engine speed decreases, a fuel shut off disable threshold is set as the desired idle speed plus a calibratable offset 48. Once the engine speed has decreased to a value below this fuel shut off disable threshold (50), the fuel shut off is disabled again and fuel is supplied to all cylinders 52.

It has to be noted that fuel shut off is also disabled if the accelerator is depressed 54 or if the vehicle speed decreases below the vehicle speed threshold value 56.

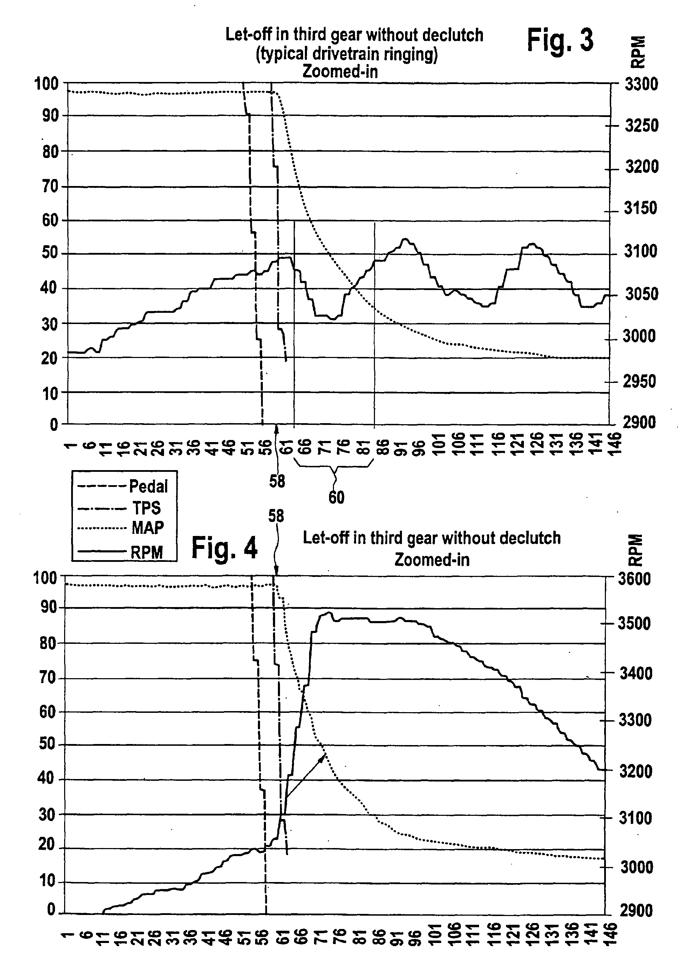

Figures 3 and 4 illustrate the normal behavior of the engine speed in case of a transition from open to closed throttle (at 58) without declutch respectively followed by a declutch.

If a declutch occurs and the fuel is not shut off, the engine speed increases due to the large amount of air present in the manifold and the sudden decrease in the load on the engine. The resulting engine speed flare is represented in fig.4. If the let off is not followed by a declutch, the engine speed performs oscillations which dampen out with time. These oscillations are due to the drivetrain oscillations and accordingly the frequency and the amplitude of these oscillations are dependent on the gear. This case is illustrated in fig. 3. The drive train oscillations thus cause the engine speed to increase immediately after the transition from open to closed throttle. It follows that the monitoring of the engine speed immediately after the transition could lead to erroneous gear shift detection.

Accordingly the method according to the present invention proposes to preferably monitor the engine speed only during a gear dependent time window 60, which is defined so as to coincide temporally with the first valley of engine speed oscillations that would be caused by a let-off without a declutch (see fig. 3). If during this time window 60, the engine speed increases to a value above the gear dependent delta engine speed threshold value, one can without any doubt conclude to the occurrence of a declutch. Hence the fuel supply to the cylinders can be shut off and the speed flare shown in fig. 4 can be avoided.

## Claims

1. A method for detecting the occurrence of a declutch of an internal combustion engine coupled to a clutch, said engine having a throttle valve for controlling intake air flow, **characterized by** the steps of:
detecting a transition from open to closed throttle;
monitoring, in a predetermined monitoring, period starting after a delay period following said transition from open to closed throttle, whether an engine speed increase is above a certain threshold; and
concluding that a declutch has occurred if during said monitoring period the engine speed increase is above said threshold.

2. The method according to claim 1, **characterized in that** said delay period, said monitoring period, and/or said threshold are gear dependent.

3. The method according to claim 1 or 2, **characterized in that** said monitoring period is a gear dependent time window after said transition from open to closed throttle.

4. The method according to claim 3, wherein a transition from open to closed throttle causes gear-dependent engine speed oscillations, **characterized in that** said time window temporally coincides with a first valley of the engine speed oscillations that would be caused by a transition from open to closed throttle without a declutch.

5. The method according to anyone of the preceding claims, wherein the throttle valve is controlled by an accelerator pedal, **characterized in that** said transition from open to closed throttle is detected on the basis of the position of said accelerator pedal.

6. A method for generating a signal indicating a declutch of an internal combustion engine coupled to a clutch, said engine having a throttle valve for controlling intake air flow, **characterized by** the steps of
receiving a signal indicating a transition from open to closed throttle;
monitoring, in a predetermined monitoring period starting after a delay period following said transition from open to closed throttle, whether an engine speed increase is above a certain threshold; and
generating a signal indicating a declutch if during said monitoring period the engine speed increase is above said threshold.

7. A method for controlling an internal combustion engine coupled to a clutch, said combustion engine comprising a fuel supply and a throttle valve for controlling intake air flow, **characterized by** the steps of:
detecting a transition from open to closed throttle;
detecting the occurrence of a declutch according to a method as claimed in any one of claims 1 to 5, and
shutting-off said fuel supply if a declutch is detected.

8. Method according to claim 7, wherein said fuel supply is shut-off until the engine speed has decreased to a predetermined engine speed threshold value or until a transition from closed to open throttle has occurred.

9. Method according to claim 7, wherein said fuel supply is shut-off only if a speed of a vehicle driven by said internal combustion engine is higher than a predetermined vehicle speed threshold value.

10. Method according to claim 10, wherein said fuel supply is shut-off until the engine speed has decreased to a predetermined threshold value or until a transition from closed to open throttle has occurred or until the speed of the vehicle has decreased to a value below said predetermined vehicle speed threshold value.

## Patentansprüche

1. Verfahren zum Erkennen des Stattfindens einer Auskupplung eines Motors mit innerer Verbrennung, der mit einer Kupplung gekoppelt ist, wobei der Motor ein Drosselventil zum Regeln des Ansaugluftstroms aufweist, **gekennzeichnet durch** folgende Schritte
Erkennen eines Übergangs von offener zu geschlossener Drosselklappe;
Überwachen, in einem vorgegebenen Überwachungszeitraum, der nach einem Verzögerungszeitraum beginnt, welcher auf den Übergang von offener zu geschlossener Drosselklappe folgt, ob ein Motordrehzahlanstieg über einem bestimmten Schwellwert liegt; und
Schlussfolgern, dass eine Auskupplung stattgefunden hat, wenn während des Überwachungszeitraums der Motordrehzahlanstieg über dem Schwellwert liegt.

2. Verfahren nach Anspruch 1, **dadurch gekennzeichnet, dass** der Verzögerungszeitraum, der Überwachungszeitraum und/oder der Schwellwert gangabhängig sind.

3. Verfahren nach Anspruch 1 oder 2, **dadurch gekennzeichnet, dass** der Überwachungszeitraum ein gangabhängiges Zeitfenster nach dem Übergang von offener zu geschlossener Drosselklappe ist.

4. Verfahren nach Anspruch 3, wobei ein Übergang von offener zu geschlossener Drosselklappe gangabhängige Motordrehzahlschwingungen bewirkt, **dadurch gekennzeichnet, dass** das Zeitfenster zeitlich mit einem ersten Minimum der Motordrehzahlschwingungen zusammenfällt, welche durch einen Übergang von offener zu geschlossener Drosselklappe ohne Auskupplung verursacht würden.

5. Verfahren nach einem beliebigen der vorhergehenden Ansprüche, wobei das Drosselventil durch ein Gaspedal gesteuert wird, **dadurch gekennzeichnet, dass** der Übergang von offener zu geschlossener Drosselklappe in Abhängigkeit von der Stellung des Gaspedals erkannt wird.

6. Verfahren zum Erzeugen eines Signals, welches eine Auskupplung eines Motors mit innerer Verbrennung, der mit einer Kupplung gekoppelt ist, angibt, wobei der Motor ein Drosselventil zum Regeln des Ansaugluftstroms aufweist, **gekennzeichnet durch** folgende Schritte
Empfangen eines Signals, welches einen Übergang von offener zu geschlossener Drosselklappe angibt;
Überwachen, in einem vorgegebenen Überwachungszeitraum, der nach einem Verzögerungszeitraum beginnt, welcher auf den Übergang von offener zu geschlossener Drosselklappe folgt, ob ein Motordrehzahlanstieg über einem bestimmten Schwellwert liegt; und
Erzeugen eines Signals, das eine Auskupplung angibt, wenn während des Überwachungszeitraums der Motordrehzahlanstieg über dem Schwellwert liegt.

7. Verfahren zum Steuern eines Motors mit innerer Verbrennung, der mit einer Kupplung gekoppelt ist, wobei der Verbrennungsmotor eine Kraftstoffzufuhr und ein Drosselventil zum Steuern des Ansaugluftstroms umfasst, **gekennzeichnet durch** folgende Schritte:
Erkennen eines Übergangs von offener zu geschlossener Drosselklappe;
Erkennen des Stattfindens einer Auskupplung gemäß einem Verfahren nach einem beliebigen der Ansprüche 1 bis 5, und
Absperren der Kraftstoffzufuhr, wenn eine Auskupplung erkannt wird.

8. Verfahren nach Anspruch 7, wobei die Kraftstoffzufuhr abgesperrt wird, bis die Motordrehzahl auf einen vorgegebenen Motordrehzahlschwellwert gesunken ist oder bis ein Übergang von geschlossener zu offener Drosselklappe erfolgt ist.

9. Verfahren nach Anspruch 7, wobei die Kraftstoffzufuhr nur dann abgesperrt wird, wenn eine Geschwindigkeit eines Fahrzeuges, welches durch den Motor mit innerer Verbrennung angetrieben wird, höher als ein vorgegebener Fahrzeuggeschwindigkeitsschwellwert ist.

10. Verfahren nach Anspruch 10, wobei die Kraftstoffzufuhr abgesperrt wird, bis die Motordrehzahl auf einen vorgegebenen Schwellwert gesunken ist oder bis ein Übergang von geschlossener zu offener Drosselklappe erfolgt ist oder bis die Geschwindigkeit des Fahrzeuges auf einen Wert unter dem vorgegebenen Fahrzeuggeschwindigkeitsschwellwert gesunken ist.

## Revendications

1. Procédé pour détecter l'apparition d'un débrayage d'un moteur à combustion interne couplé à un embrayage, ledit moteur ayant une vanne papillon pour commander l'écoulement de l'air d'admission, **caractérisé par** les étapes de:
détection d'une transition du papillon ouvert à fermé;
surveillance, dans une période de surveillance prédéterminée commençant après un délai de retard suivant ladite transition du papillon ouvert à fermé, si une augmentation de la vitesse du moteur est supérieure à un certain seuil ; et
conclusion qu'un débrayage s'est produit si pendant ladite période de surveillance, l'augmentation de la vitesse du moteur est supérieure audit seuil.

2. Procédé selon la revendication 1, **caractérisé en ce que** ledit délai de retard, ladite période de surveillance, et/ou ledit seuil sont dépendants du rapport de transmission

3. Procédé selon la revendication 1 ou 2, **caractérisé en ce que** ladite période de surveillance est une fenêtre de temps dépendante du rapport de transmission après ladite transition du papillon ouvert à fermé

4. Procédé selon la revendication 3, dans lequel une transition du papillon ouvert à fermé provoque des oscillations de la vitesse du moteur dépendantes du rapport de transmission, **caractérisé en ce que** ladite fenêtre de temps coïncide dans le temps avec une première valeur minimale des oscillations de la vitesse du moteur qui seraient provoquées par une transition du papillon ouvert à fermé sans un débrayage

5. Procédé selon l'une quelconque des revendications précédentes, dans lequel la vanne papillon est commandée par une pédale d'accélérateur, **caractérisé en ce que** ladite transition du papillon ouvert à fermé est détectée sur la base de la position de ladite pédale d'accélérateur

6. Procédé pour générer un signal indiquant un débrayage d'un moteur combustion interne couplé à un embrayage, ledit moteur ayant une vanne papillon pour commander l'écoulement de l'air d'admission, **caractérisé par** les étapes de:
réception d'un signal indiquant une transition du papillon ouvert à fermé ;
surveillance, dans une période de surveillance prédéterminée commençant après un délai de retard suivant ladite transition du papillon ouvert à fermé, si une augmentation de la vitesse du moteur est supérieure à un certain seuil ; et
génération d'un signal indiquant un débrayage si pendant ladite période de surveillance, l'augmentation de la vitesse du moteur est supérieure audit seuil

7. Procédé pour commander un moteur à combustion interne couplé à un embrayage, ledit moteur à combustion comprenant une alimentation en carburant et une vanne papillon pour commander l'écoulement de l'air d'admission, **caractérisé par** les étapes de :
détection d'une transition du papillon ouvert à fermé ;
détection de l'apparition d'un débrayage selon un procédé revendiqué dans l'une quelconque des revendications 1 à 5, et
coupure de ladite alimentation en carburant si un débrayage est détecté

8. Procédé selon la revendication 7, dans lequel ladite alimentation en carburant est coupée jusqu'à ce que la vitesse du moteur ait diminué à une valeur de seuil prédéterminée de la vitesse du moteur ou jusqu'à ce qu'une transition du papillon fermé à ouvert se soit produite

9. Procédé selon la revendication 7, dans lequel ladite alimentation en carburant est coupée uniquement si une vitesse d'un véhicule entraîné par ledit moteur à combustion interne est supérieure à une valeur de seuil de la vitesse du véhicule prédéterminée

10. Procédé selon la revendication 10, dans lequel ladite alimentation en carburant est coupée jusqu'à ce que la vitesse du moteur ait diminué à une valeur de seuil prédéterminée ou jusqu'à ce qu'une transition du papillon fermé à ouvert se soit produite ou jusqu'à ce que la vitesse du véhicule ait diminué à une valeur inférieure à ladite valeur de seuil prédéterminée de la vitesse du véhicule
